# EUROPÄISCHE PATENTANMELDUNG

(11) **EP 1 439 355 A2**
(43) Veröffentlichungstag der Anmeldung: **21.07.2004**
(21) Anmeldenummer: 03029519.0
(22) Anmeldetag: 20.12.2003
(51) Int. Cl.: F25B 41/06

(54) **Fühler für ein thermisches Einspritzventil**

(30) Priorität: 17.01.2003 DE 10301680
(71) Anmelder: Linde Kältetechnik GmbH & Co.KG, 50999 Köln (DE)
(72) Erfinder: Koch, Klaus, 44534 Lünen (DE)
(74) Vertreter: Zahn, Christoph

(57) **Zusammenfassung**

Es wird ein Fühler für ein thermisches Einspritzventil, aufweisend wenigstens eine Heizung, beschrieben.

Erfindungsgemäß ist die oder zumindest eine der Heizungen (2) zumindest teilweise im Inneren des Fühlers (1) angeordnet.

Hierbei kann bzw. können die Heizungen (2) auswechselbar angeordnet sein. Auch kann die Leistung der oder zumindest einer der Heizungen (2) variiert werden.

## Beschreibung

Die Erfindung betrifft einen Fühler für ein thermisches Einspritzventil, aufweisend wenigstens eine Heizung.

Gattungsgemäße Fühler für thermische Einspritzventile kommen beispielsweise innerhalb von (Verbund)Kälteanlagen zur Anwendung. Thermische Einspritzventile sind hierbei den einzelnen Verdampfem bzw. Kühlstellen vorgeschaltet und regeln die Flüssigkeitszufuhr zu dem jeweils nachgeschalteten Verdampfer bzw. der jeweils nachgeschalteten Kühlstelle.

Aus der deutschen Offenlegungsschrift 100 21 610 ist ein Verfahren zum Betreiben einer (Verbund)Kälteanlage mit wenigstens einem Verdampfer und wenigstens einem Verdichter bekannt, wobei dem Verdampfer ein Kältemittel bzw. Kältemittelgemisch geregelt über ein thermisches Einspritzventil zugeführt wird und die Regelung des thermischen Einspritzventils mittels der Erfassung eines geeigneten Temperaturwertes erfolgt. Hierbei wird der der Ermittlung des Temperaturwertes dienenden Messvorrichtung eine Heizung zugeordnet, mittels derer eine Erwärmung der Messvorrichtung - also des Temperaturfühlers - realisiert werden kann.

Bei gattungsgemäßen Fühlern für thermische Einspritzventile werden die Heizungen bisher außen an den Fühlem angeordnet. Derartige Fühler bestehen im Regelfall lediglich aus einem Rohrstück, in dem ein druckempfindliches Medium angeordnet ist. Die vorgesehene Heizung ist im Regelfall von außen auf das Rohrstück aufgelötet.

Von Nachteil bei einer derartigen Konstruktion ist jedoch, dass der Wärmeübertrag auf das in dem Fühler strömende, flüssige Kältemittel bzw. Kältemittelgemisch nicht optimal ist.

Aufgabe der vorliegenden Erfindung ist es, einen gattungsgemäßen Fühler für ein thermisches Einspritzventil anzugeben, der diesen Nachteil vermeidet.

Dies wird erfindungsgemäß dadurch erreicht, dass die oder zumindest eine der Heizungen zumindest teilweise im Inneren des Fühlers angeordnet ist.

Dadurch wird erreicht, dass das Erwärmen des innerhalb des Fühlers strömenden, flüssigen Kältemittels bzw. Kältemittelgemisches in energetischer Hinsicht verbessert wird.

Gemäß einer vorteilhaften Ausgestaltung des erfindungsgemäßen Fühlers ist die oder zumindest eine der Heizungen vollständig im Inneren des Fühlers angeordnet.

Mittels dieser Ausgestaltung wird eine noch effektivere Erwärmung des Kältemittels bzw. Kältemittelgemisches erreicht. Von Nachteil bei dieser Ausgestaltung ist jedoch, dass im Regelfall der Austausch einer defekten Heizung nicht mehr möglich ist, der Fühler somit als Ganzes ausgetauscht werden muss.

Den erfindungsgemäßen Fühler für ein thermisches Einspritzventil weiterbildend wird vorgeschlagen, dass die Heizung(en) auswechselbar angeordnet ist bzw. sind.

Mittels dieser Ausgestaltung werden zum einen die Wartungskosten derartiger Fühler verringert und zum anderen wird ein Anpassen der mit dem erfindungsgemäßen Fühler ausgestatteten Kälteanlage an unterschiedliche Kältemittel bzw. Kältemittelgemische ermöglicht.

Letzteres wird - zumindest in bestimmten Grenzen - auch dann erreicht, wenn gemäß einer weiteren vorteilhaften Ausgestaltung des erfindungsgemäßen Fühlers die Leistung der oder zumindest einer der Heizungen variierbar ist.

Auch diese Ausgestaltung der Erfindung stellt sicher, dass ein Anpassen des erfindungsgemäßen Fühlers an unterschiedliche Kältemittel bzw. Kältemittelgemische möglich ist.

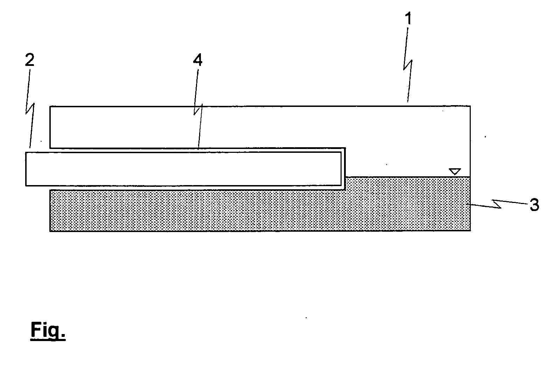

Der erfindungsgemäße Fühler für ein thermisches Einspritzventil sowie weitere Ausgestaltungen desselben seien anhand des in der Figur dargestellten Ausführungsbeispieles näher erläutert.

Die Figur zeigt eine seitliche Schnittdarstellung durch eine mögliche Ausführungsform des erfindungsgemäßen Fühlers 1. Dieser wird von einem flüssigen Kältemittel bzw. Kältemittelgemisch 3 durchströmt. In der Figur nicht dargestellt ist das bereits erwähnte druckempfindliche Medium, das das innere des Fühlers 1 zumindest teilweise ausfüllt. Der erfindungsgemäße Fühler 1 weist eine Aussparung 4, in der eine Heizung 2 angeordnet ist, auf. Bei der in der Figur dargestellten Ausführungsform des erfindungsgemäßen Fühlers 1 ist die Heizung 2 in die Aussparung 4 lediglich eingeschoben, so dass sie im falle eines Defektes ohne großen Aufwand - ggf. auch durch einen Nichttechniker - ausgewechselt werden kann.

Der erfindungsgemäße Fühler 1 für ein thermisches Einspritzventil eignet sich insbesondere dann, wenn die Leistung der Heizung 2 variierbar ist, für eine Vielzahl unterschiedlichster Kältemittel bzw. Kältemittelgemische. Auch können nunmehr erstmals Kälteanlagen, bei denen Kohlendioxid als Kältemittel zur Anwendung kommt, mit thermischen Einspritzventilen betrieben werden. Dies war bisher nicht möglich, da in Abhängigkeit von dem verwendeten Kältemittel entsprechende "Antriebsfüllungen", die den im Wesentlichen gleichen Siedepunkt wie das verwendete Kältemittel aufweisen, in den Ventilen erforderlich waren.

## Patentansprüche

1. Fühler für ein thermisches Einspritzventil, aufweisend wenigstens eine Heizung, **dadurch gekennzeichnet, dass** die oder zumindest eine der Heizungen (2) zumindest teilweise im Inneren des Fühlers (1) angeordnet ist.

2. Fühler für ein thermisches Einspritzventil nach Anspruch 1, **dadurch gekennzeichnet, dass** die oder zumindest eine der Heizungen (2) vollständig im Inneren des Fühlers (1) angeordnet ist.

3. Fühler für ein thermisches Einspritzventil nach Anspruch 1 oder 2, **dadurch gekennzeichnet, dass** die Heizung(en) (2) auswechselbar angeordnet ist bzw. sind.

4. Fühler für ein thermisches Einspritzventil nach einem der vorhergehenden Ansprüche 1 bis 3, **dadurch gekennzeichnet, dass** die Leistung der oder zumindest einer der Heizungen (2) variierbar ist.
